# EUROPEAN PATENT APPLICATION

(11) **EP 4 580 156 A1**
(43) Date of publication of application: **02.07.2025**
(21) Application number: 23869875.7
(22) Date of filing: 30.06.2023
(51) Int. Cl.: H04L 45/30

(54) **ROUTING LINK PLANNING METHOD AND APPARATUS FOR DATA MULTIPLEXING**

(30) Priority: 29.09.2022 CN 202211202818
(71) Applicant: ZTE CORPORATION, Shenzhen, Guangdong 518057 (CN)
(72) Inventor: CHEN, Junjiang, Shenzhen, Guangdong 518057 (CN); LIU, Zhilong, Shenzhen, Guangdong 518057 (CN); GUO, Chengfeng, Shenzhen, Guangdong 518057 (CN); CHEN, Hua, Shenzhen, Guangdong 518057 (CN); XU, Longyu, Shenzhen, Guangdong 518057 (CN); ZHANG, Sen, Shenzhen, Guangdong 518057 (CN)
(74) Representative: Carangelo, Pierluigi
(86) International application number: PCT/CN2023/105179
(87) International publication number: WO 2024/066627

(57) **Abstract**

Embodiments of the present disclosure provide a routing link planning method and apparatus for data multiplexing. The method comprises: establishing, in a Real Time Network ,RTN, an initial routing link from a source node where a server is located to a first target node where a first client is located; and when a second client that shares data of the server with the first client accesses the RTN, planning a data reuse routing link from the source node to a second target node according to whether the second target node where the second client is located is a data node of the initial routing link.

## Description

### Technical Field

Embodiments of the present disclosure relate to the field of real time communications, and in particular, to a routing link planning method and apparatus for data reuse.

### Background

Real Time Communication (RTC) has been widely applied in pan-entertainment, education, finance, and scenarios requiring high interactivity. With the continuous development of the digital world and the industrial transformation brought about by the metaverse, the RTC technology is expected to have an even broader scope for development. From both international and domestic perspectives, the RTC-related industry continues to maintain a high growth rate, and its underlying network, i.e. Real Time Network (RTN), is also facing a new wave of technological innovation.

Research indicates that the routing planning technology in RTN in the related art generally does not support data reuse scenarios. For example, if an RTN system has planned and established a routing link from a server to a client, and a new client also needs to access data from the same server, a routing link from the server to the new client often needs to be established. This approach leads to the following pain points:
First point is low throughput and high costs. The newly planned routing link may overlap with the previously established routing link that is already transmitting data. This results in redundant consumption of network node resources and transmission bandwidth resources, thereby resulting in lower overall network throughput and correspondingly higher costs.

Second point is increased latency. Planning a new routing link from a source node to a new target node can cause a longer time to establish a new network link when service data is forwarded. Additionally, the data transmission time is also extended, which does not meet the low-latency requirements of an RTN system.

### Summary

Some embodiments of the present disclosure provide a routing link planning method and apparatus for data multiplexing, so as to at least solve the problem that the routing planning technology in the RTN does not support data reuse scenarios in the related art.

According to some embodiments of the present disclosure, provided is a routing link planning method for data reuse, comprising: establishing, in a Real Time Network (RTN), an initial routing link from a source node where a server is located to a first target node where a first client is located; and when a second client that shares data of the server with the first client accesses the RTN, planning a data reuse routing link from the source node to a second target node according to whether the second target node where the second client is located is a data node of the initial routing link.

According to some other embodiments of the present disclosure, provided is a routing link planning apparatus for data reuse, comprising:
an establishment module, configured to establish, in a Real Time Network (RTN), an initial routing link from a source node where a server is located to a first target node where a first client is located; and
a planning module, configured to, when a second client that shares data of the server with the first client accesses the RTN, plan a data reuse routing link from the source node to a second target node according to whether the second target node where the second client is located is a data node of the initial routing link.

According to still some other embodiments of the present disclosure, further provided is a computer-readable storage medium storing a computer program, wherein the computer program is configured to execute the steps in any one of the method embodiments when running.

According to still some other embodiments of the present disclosure, further provided is an electronic device, comprising a memory and a processor, wherein the memory stores a computer program, and the processor is configured to run the computer program to execute the steps in any one of the method embodiments.

### Brief Description of the Drawings

Fig. 1 is a structural block diagram of hardware of a computer terminal for running a routing link planning method for data reuse according to embodiments of the present disclosure;
Fig. 2 is a flowchart of a routing link planning method for data reuse according to embodiments of the present disclosure;
Fig. 3 is a structural block diagram of a routing link planning apparatus for data reuse according to embodiments of the present disclosure;
Fig. 4 is a structural block diagram of a routing link planning apparatus for data reuse according to some other embodiments of the present disclosure;
Fig. 5 is a structural block diagram of a routing link planning apparatus for data reuse according to still some other embodiments of the present disclosure;
Fig. 6 is a flowchart of a routing link planning method supporting data reuse according to embodiments of the present disclosure;
Fig. 7 is a schematic diagram of planning an initial routing link according to embodiments of the present disclosure;
Fig. 8 is a schematic diagram of candidate nodes according to embodiments of the present disclosure;
Fig. 9 is a schematic diagram of non-overlapping routing links according to embodiments of the present disclosure;
Fig. 10 is a schematic diagram of overlapped routing links according to embodiments of the present disclosure; and
Fig. 11 is a schematic diagram of routing planning between data instances according to embodiments of the present disclosure.

### Detailed Description of the Embodiments

Hereinafter, embodiments of the present disclosure are described in detail with reference to the accompanying drawings and in conjunction with the embodiments.

It should be noted that the terms "first", "second", etc. in the description, claims, and accompanying drawings of the present disclosure are used to distinguish similar objects, and are not necessarily used to describe a specific sequence or precedence order.

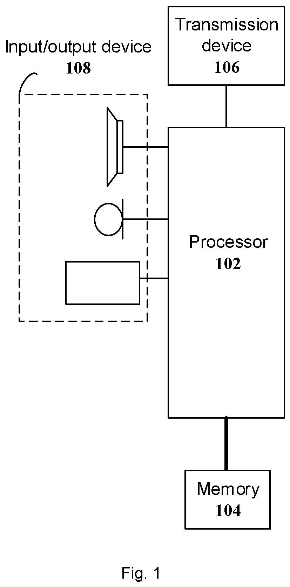

Method embodiments provided in the embodiments of the present disclosure can be executed in a mobile terminal, a computer terminal or a similar computing apparatus. Taking running on a computer terminal as an example, Fig. 1 is a structural block diagram of hardware of the computer terminal for running a routing link planning method for data reuse according to embodiments of the present disclosure. As shown in Fig. 1, the computer terminal may include: one or more (only one shown in Fig. 1) processors 102 (the processors 102 may include, but not limited to processing apparatuses such as a microprocessor or a Field Programmable Gate Array (FPGA)); and a memory 104 for storing data; wherein the computer terminal can further include a transmission device 106 for communication functions and an input/output device 108. A person of ordinary skill in the art would understand that the structure shown in Fig. 1 is merely exemplary, and does not limit the structure of the computer terminal. For example, the computer terminal may also include more or fewer assemblies than those shown in Fig. 1, or have different configurations from that shown in Fig. 1.

The memory 104 may be used for storing a computer program, for example, a software program and module of disclosure software, such as a computer program corresponding to the routing link planning method for data reuse in embodiments of the present disclosure. The processor 102 executes various functional disclosures and data processing by running the computer program stored in the memory 104, i.e. implementing the described method. The memory 104 may include a high-speed random access memory, and may further include a non-transitory memory, such as one or more magnetic storages, flash memories or other non-transitory solid-state memories. In some examples, the memory 104 may further include memories remotely arranged with respect to the processors 102, and these remote memories may be connected to the computer terminal via a network. Examples of the network include, but are not limited to the Internet, an intranet, a local area network, a mobile communication network and combinations thereof.

The transmission device 106 is used to receive or send data via a network. Specific examples of the network may include a wireless network provided by a communication provider of the computer terminal. In one example, the transmission device 106 includes a network adapter (Network Interface Controller, NIC for short) which may be connected to other network devices via a base station, thereby being able to communicate with the Internet. In one example, the transmission device 106 may be a Radio Frequency (RF for short) module which is configured to communicate with the Internet in a wireless manner.

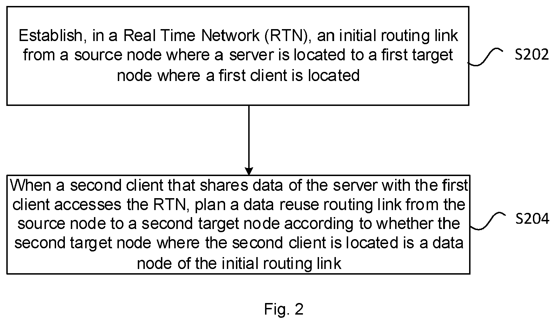

Embodiments of the present disclosure provide a routing link planning method for data reuse. Fig. 2 is a flowchart of a routing link planning method for data reuse according to embodiments of the present disclosure. As shown in Fig. 2, the flowchart includes the following steps:
step S202, an initial routing link is established in a Real Time Network (RTN) from a source node where a server is located to a first target node where a first client is located; and
step S204: when a second client that shares data of the server with the first client accesses the RTN, a data reuse routing link is planned from the source node to a second target node according to whether the second target node where the second client is located is a data node of the initial routing link.

In step S204 of this embodiment, if the second target node where the second client is located is not a data node of the initial routing link, a data reuse routing link being planned from the source node to the second target node includes: candidate nodes are selected from the data topology of the RTN, and the data reuse routing link is planned according to the candidate nodes and a routing policy.

In step S204 of this embodiment, if the second target node where the second client is located is a data node of the initial routing link, a data reuse routing link being planned from the source node to the second target node includes: if the load of a data instance included in the second target node exceeds a threshold, candidate nodes are selected from the data topology of the RTN, and the data reuse routing link is planned according to the candidate nodes and a routing policy; and if the load of a data instance included in the second target node does not exceed the threshold, in the initial routing link, a routing link between the source node and the second target node is planned as the data reuse routing link.

After step S204 of this embodiment, the method further includes: if there is no overlap between the data reuse routing link and the initial routing link, data of a server in the source node is reused to the second client; if there is overlap between the data reuse routing link and the initial routing link, and the load of a data instance on a last overlapped data node does not exceed a preset threshold, data in the last overlapped node is reused to the second client; and if there is overlap between the data reuse routing link and the initial routing link, and the load of a data instance on a last overlapped data node exceeds the preset threshold, a new data reuse routing link is re-planned.

In some exemplary embodiments, the method further includes: if there is overlap between the data reuse routing link and the initial routing link, and the load of multiple data instances included on a last overlapped data node does not exceed a preset threshold, data of the data instance with the lightest load and the fewest hops is selected for reuse to the second client.

In some exemplary embodiments, candidate nodes being selected from the data topology of the RTN includes: data nodes in the initial routing link are selected as the candidate nodes; and except for the data nodes in the initial routing link, data nodes whose load of data instances in the RTN does not exceed a preset threshold are selected as candidate nodes.

After step S204 of this embodiment, the method further includes: the data reuse routing link is added to the initial routing link.

By means of the steps above, when a second client needs to share data of a server with a first client, a data reuse routing link is planned according to whether a target node where the second client is located belongs to an initial routing link and considering factors such as real-time data topology, node load and instance load. This enables the second client to reuse the data from data nodes in the initial routing link without planning a new routing link again to acquire the data. Therefore, the problem in the related art that a routing planning technology in an RTN does not support data reuse scenarios can be solved, achieving the effect of reducing the time required for establishing the data reuse link and transmitting the data.

From the description of the embodiments above, a person skilled in the art would have been able to clearly understand that the methods in the embodiments above may be implemented by using software and necessary general hardware platforms, and of course may also be implemented using hardware, but in many cases, the former is a better embodiment. On the basis of such understanding, the portion of the technical solution of the present disclosure that contributes in essence or to the related art may be embodied in the form of a computer software product stored in a storage medium (such as an Read-Only Memory/Random Access Memory (ROM/RAM), a magnetic disk and an optical disc); and the storage medium includes several instructions to cause a terminal device (which may be a mobile phone, a computer, a server or a network device, etc.) to perform the method according to the various embodiments of the present disclosure.

The present embodiment further provides a routing link planning apparatus for data reuse, which is configured to implement the embodiments above and preferred embodiments, and what has been described will not be repeated again. As used below, the term "module" may implement a combination of software and/or hardware of predetermined functions. Although the apparatus described in the following embodiments is preferably implemented in software, implementation in hardware or a combination of software and hardware is also possible and could have been conceived.

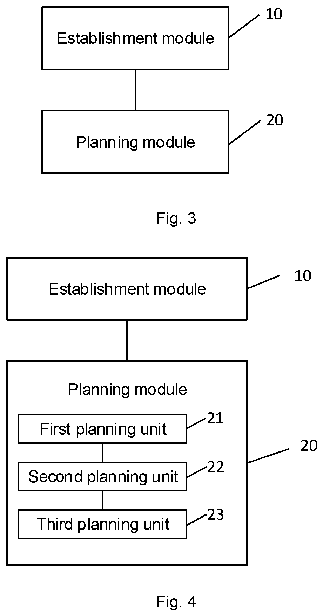

Fig. 3 is a structural block diagram of a routing link planning apparatus for data reuse according to embodiments of the present disclosure. As shown in Fig. 3, the apparatus includes: an establishment module 10 and a planning module 20.

The establishment module 10 is configured to establish, in a Real Time Network (RTN), an initial routing link from a source node where a server is located to a first target node where a first client is located.

The planning module 20 is configured to, when a second client that shares data of the server with the first client accesses the RTN, plan a data reuse routing link from the source node to a second target node according to whether the second target node where the second client is located is a data node of the initial routing link.

Fig. 4 is a structural block diagram of a routing link planning apparatus for data reuse according to embodiments of the present disclosure. As shown in Fig. 4, in addition to the modules shown in Fig. 3, the planning module 20 further includes:
a first planning unit 21, configured to select candidate nodes from the data topology of the RTN, and plan the data reuse routing link according to the candidate nodes and a routing policy;
a second planning unit 22, configured to, if the load of a data instance included in the second target node exceeds a threshold, select candidate nodes from the data topology of the RTN, and plan the data reuse routing link according to the candidate nodes and a routing policy; and
a third planning unit 23, configured to, if the load of a data instance included in the second target node does not exceed the threshold, plan a routing link between the source node and the second target node in the initial routing link as the data reuse routing link.

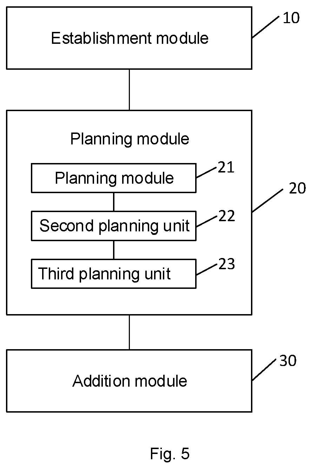

Fig. 5 is a structural block diagram of a routing link planning apparatus for data reuse according to embodiments of the present disclosure. As shown in Fig. 5, in addition to all the modules shown in Fig. 4, the apparatus further includes:
an addition module 30, configured to add the data reuse routing link to the initial routing link.

It should be noted that the various modules above may be implemented by software or hardware. The latter may be implemented in the following manner, but is not limited thereto: all the modules above are located in the same processor; or all the modules above are located in different processors in any arbitrary combination manner.

To facilitate understanding of the technical solutions provided in the present disclosure, the technical solutions will be described in detail below in conjunction with embodiments of specific scenarios.

In the embodiments of the present disclosure, a new client access point is finely divided into a same-node scenario and different-node scenario, i.e. whether the new client access point belongs to a data node in an existing initial routing link, and respective reuse logic is used according to different scenarios, so as to achieve fine-grained reuse, so that routing planning reuse can be supported in an RTN.

Specifically, the reuse logic in the same-node scenario is as follows:
the load condition of data instances under the same node is analyzed, so as to ensure the reusability of the instances; and data instances with light load and fewer hops under the same node are reused. This is equivalent to completely reuse the routing link (i.e. the initial routing link) of the data topology, where only data instance branches are pulled from this node, and other nodes and link resources except this node are not occupied.

The reuse logic in the different-node scenario is as follows:
candidate nodes are selected from the RTN; a new route is planned according to the candidate nodes and its overlap with the data topology (i.e. the initial routing link) is analyzed, and whether to reuse from a data node or from a data source is further planned by considering a load condition of a data instance under the data node, so that a new client can reuse the overlapped link as much as possible, thereby the newly planned routing link under an appointed policy is the shortest, and releasing other nodes and link resources in the RTN.

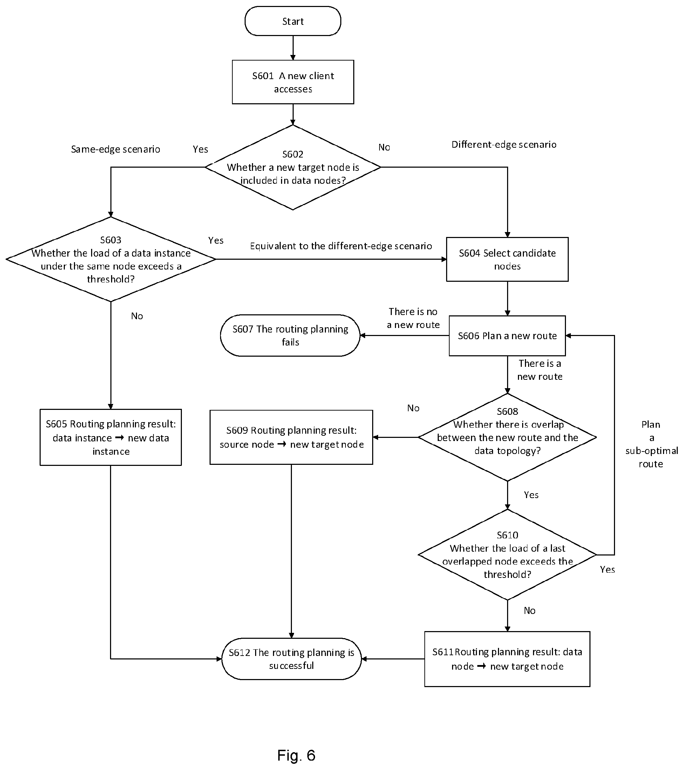

Fig. 6 is a flowchart of a routing planning method supporting data reuse according to embodiments of the present disclosure. In the method, it is assumed that an initial routing link already exists from a source node where a server is located to a target node where a client is located, meaning that a data topology is already established. As shown in Fig. 6, the method includes the following steps:
Step S601, a new client accesses the RTN.

Specifically, when a new client accesses the RTN and wants to reuse data of the same server, the routing planning logic for data reuse will be triggered.

Step S602, it is determined whether the new target node is included in the data nodes.

Specifically, if it is included, it is determined to be a same-edge node scenario, and the process proceeds to step S603.

If it is not included, it is determined to be a different-edge node scenario, and the process proceeds to step S604.

Step S603, it is further determined whether the load of a data instance under the same node exceeds a set threshold.

Specifically, if it does not exceed the threshold, the process proceeds to step S605; and if it exceeds the threshold, the process is equivalent to a different-edge scenario logic, and needs to proceed to step S604.

Step S604, candidate nodes are selected, and the process proceeds to step S606 once the candidate nodes have been selected.

Step S605, a route from an existing data instance to a new data instance under the same node is planned.

Specifically, a route from an existing data instance to a new instance under the same node is planned, and the route is used as the result of this routing planning, and then the process proceeds to step S612.

Step S606, a new route from the source node to a new target node is planned based on the candidate nodes.

Specifically, if a new route cannot be planned, the process proceeds to step S607, and this routing planning fails.

If a new route can be planned, the process proceeds to step S608.

Step S607, the routing planning fails.

Step S608, it is determined whether the new route overlaps with the data topology.

Specifically, if there is no overlap, the process proceeds to step S609; and if there is overlap, the process proceeds to step S610.

Step S609, the new route is used as the result of this routing planning.

Specifically, the new route is a routing link from the source node to a new target node where the new client is located.

Step S610, it is determined whether the load of the last overlapped node exceeds a set threshold.

Specifically, it is determined whether the load of the last node repeated between the new route and the initial routing link exceeds a predetermined threshold; if it does not exceed the threshold, the process proceeds to step S611; and if it exceeds the threshold, it is necessary to re-plan a sub-optimal routing link from the source node to the new target node, and step S606 to step S610 are repeated.

Step S611, the existing data node in the initial routing is planned to connect to the new target node as the result of this routing planning.

Step S612: the routing planning is successful.

In the embodiments, when there are more new clients accessing the RTN and it is desired to realize high reuse, all the previously routing links planned need to be added to the data topology, and step S601 to step S611 are repeated.

The following is a detailed description of relevant steps of the routing planning method supporting data reuse in combination with the specific implementation scenarios.

### I. Regarding planning an initial route

The sending and receiving ends for service data are distributed at different edge nodes of the RTN, and when it is intended to perform accelerated transmission through the RTN, it is necessary to plan an optimal routing link from a source node instance to a target node instance for the service data. The link is referred to as a data topology, the nodes thereof are referred to as data nodes, and the instances thereof are referred to as data instances.

It is assumed that an initial routing link from a source node to a target node has been planned at the beginning.

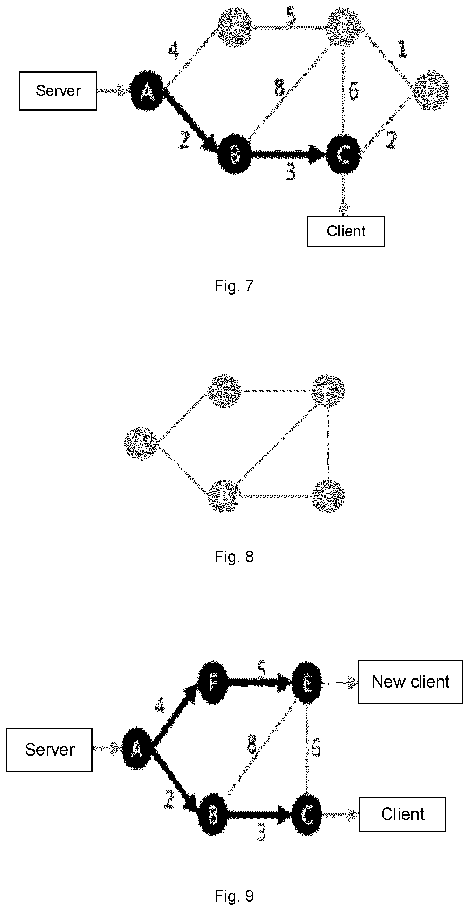

For example, servers and clients of applications such as mobile phone apps and Personal Computer (PC) software are all connected to the RTN. In this case, the data source of the server is on a data instance of a node A, the client accesses a data instance of a node C, and if the client wants to acquire data of the server, an optimal routing link from the source node A to the target node C is planned according to an appointed routing policy, which can be represented as "A→B→C", as shown in Fig. 7.

### II. Regarding a client accessing the RTN

When a new client accesses the RTN and wants to reuse data of the same server, the routing planning logic for data reuse is triggered.

### III. Regarding the different-edge node scenario

It is determined whether the edge node, i.e., the new target node, where the instance accessed by the new client is located is included in the data nodes of the initial routing link. If not, it is determined as a different-edge node scenario.

### IV. Regarding selecting candidate nodes

Candidate nodes are selected as available nodes during routing planning, comprising: on the one hand, nodes in the data topology in the initial routing link are directly used as the candidate nodes; on the other hand, the remaining edge nodes in the RTN topology also need to be screened, and if the real-time load of nodes does not exceed a set threshold, the nodes are selected as candidate nodes, otherwise, the nodes are removed.

For example, the routing link nodes A, B, and C in step 1 may directly serve as candidate nodes. At the same time, the remaining nodes are screened, and if a node D can transmit the total data traffic of 1000 Mbps with a threshold of 90%, and its current traffic is 904 Mbps, accounting for 90.4% of the total, which exceeds the threshold, the node D cannot be taken as a candidate node. By such analogy, the finally selected candidate nodes are A, B, C, E, and **F,** as shown in Fig. 8.

### V. Regarding planning a new route

An optimal routing link from the source node of the initial routing link to the new target node is planned according to the candidate nodes above and the routing policy when planning the initial routing link. If there is no routing link, the routing planning fails.

For example, in step 1, the source node is A, the new target node is E, and an optimal route from A to E needs to be planned.

### VI. Regarding overlapping of routing links

It is determined whether there is overlap between the above planned new routing link (except the source node) and the data topology (except the source node) of the initial routing link.

If there is no overlap between the routing links, the new target node starts to reuse data from the source node, that is, the above planned new routing link is used as the result of this routing planning. Meanwhile, the new routing link is also added to the data topology of the initial routing link.

For example, according to the above planned new route, the newly planned optimal routing link from the source node A to the new target node E is "A→F→E"; while the routing link of the data topology (i.e. the initial routing link) is "A→B→C"; by contrast, there is no overlap between the routing links. In this case, the source node A will replicate a piece of data, and establish a transmission link to the new target node E to implement data reuse, that is, a routing planning result in this scenario is "A→F→E", as shown in Fig. 9 below.

If there is overlap between the routing links, and the real-time load of the last overlapped node does not exceed the set threshold, the new target node reuses data from the last overlapped node, that is, the data node in the initial routing link is planned to connect to the new target node as the result of this routing planning. Meanwhile, the new routing link is also added to the data topology of the initial routing link.

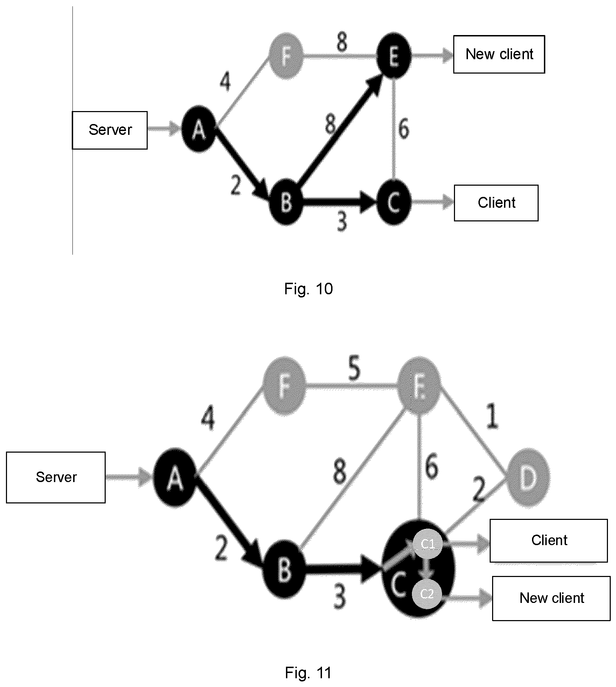

For example, according to the above planned new route, the newly planned optimal routing link from the source node A to the new target node E is "A→B→E"; while the routing link of the data topology is "A→B→C"; by contrast, the overlapped link is "A→B". In this case, the data node B will replicate a piece of data, and establish a transmission link to the new target node E to implement data reuse, without having to replicate the data from the source node A to the new target node E sequentially, that is, the routing planning result in this scenario is "B→E", as shown in Fig. 10 below.

In this embodiment, if there is overlap and the real-time load of the last overlapped node exceeds the threshold, the new target node cannot reuse data from the last overlapped node at this time, and it is necessary to re-plan a sub-optimal routing link from the source node in the initial routing link to the new target node, and repeat the related steps in sections "IV" to "VI".

### VII. Same-edge node scenario

It is determined whether the edge node, i.e., the new target node, where the data instance accessed by the new client is located is included in the data nodes of the initial routing link. If so, it is determined to be a same-edge node scenario, and the new target node is equivalent to a certain node among the data nodes.

### VIII. If the instance load does not exceed the threshold

According to the data topology of the initial routing link, if it is determined that the load of the data instance under the same node does not exceed the set threshold, the new data instance accessed by the new client may directly reuse data from the data instance under the same node, that is, the data instance under the same node is planned to connect to the new instance as the result of this routing planning. Meanwhile, the new routing link is also added to the data topology of the initial routing link.

For example, a new instance C2 is distributed at the same edge node C as a data instance C1 in the initial routing link. If the instance C1 can transmit the total data traffic of 500 Mbps with a threshold of 90%, and its current traffic is 300 Mbps, accounting for 60% of the total, which does not exceed the threshold. In this case, the instance C1 will replicate a piece of data, and establish a transmission link to the instance C2 for implementing data reuse, without having to replicate the data from the source node A to the node C sequentially, that is, the routing planning result in this scenario is "C1→C2", as shown in Fig. 11.

### IX. If the instance load exceeds the threshold

According to the data topology of the initial routing link, if it is determined that the load of a data instance under the same node exceeds a set threshold, the new instance cannot directly reuse data from the data instance under the same node. In this case, this is equivalent to a different-edge node scenario, and related steps in sections "IV" to "VI" need to be repeated.

### X. Multiple new client access realizes high reuse

When there are more new clients accessing the RTN and also want to reuse data of the same server, i.e. want to realize high reuse, it is necessary to add all routing links planned previously to the data topology, and repeat the related steps in sections "III" to "VII".

For example, if the edge node where the instance accessed by the new client is located is not included in the data nodes, it is determined as a different-edge node scenario; and if the edge node where the instance accessed by the new client is located is included in the data nodes, it is determined as a same-edge node scenario. Specifically, when there are multiple data instances under the same edge node, the data instance with the lightest load and the fewest hops is selected in real time for reuse.

The embodiments of the present disclosure provide a routing planning method supporting data reuse. A reuse route link is planned by classifying a same-edge node scenario and a different-edge node scenario and in view of factors such as real-time data topology, node load and instance load. It can address the issue of unsupported routing planning reuse in an RTN. Through the routing link planned in the embodiments of the present disclosure, the overall throughput of the RTN can be improved, corresponding cost expenditures can be reduced, and the time required for establishing and transmitting routing links can be shortened. This achieves low cost and low latency, enhancing product competitiveness.

The embodiments of the present disclosure can be applied to an RTC-related industry, such as video conference, cloud computer, interactive live streaming, and Extended Reality (XR).

Embodiments of the present disclosure further provide a computer-readable storage medium storing a computer program, wherein the computer program is configured to execute the steps in any one of the method embodiments when running.

In some exemplary embodiments, the computer-readable storage medium may include, but is not limited to: various media that can store a computer program, such as a USB flash drive, a Read-Only Memory (ROM for short), a Random Access Memory (RAM for short), a removable hard disk, a magnetic disk, or an optical disc.

Embodiments of the present disclosure further provide an electronic device, comprising a memory and a processor, wherein the memory stores a computer program, and the processor is configured to run the computer program so as to execute the steps in any one of the method embodiments.

In some exemplary embodiments, the electronic device can further include a transmission device and an input/output device, wherein the transmission device is connected to the processor, and the input/output device is connected to the processor.

For specific examples in the present embodiment, reference can be made to the examples described in the described embodiments and exemplary embodiments, and thus they will not be repeated again in the present embodiment.

A person skilled in the art will understand that various modules or various steps in embodiments of the present disclosure can be implemented by means of a general computing apparatus, can be integrated on one single computing apparatus, or distributed over a network consisting of a plurality of computing apparatuses, and the various modules or various steps can be implemented by means of program codes executable by a computing apparatus, and thus can be stored in a storage device and executed by a computing apparatus, and in some cases, the shown or described steps may be executed in a sequence different from that shown herein, or they are manufactured into integrated circuit modules, or multiple modules or steps therein are manufactured into a single integrated circuit module. Thus, the present disclosure is not limited to any specific combination of hardware and software.

The content above is only preferred embodiments of the present disclosure and is not intended to limit the present disclosure. For a person skilled in the art, the present disclosure may have various modifications and variations. Any modifications, equivalent replacements, improvements, etc. made within the spirit and principle of the present disclosure shall all fall within the scope of protection of the present disclosure.

## Claims

1. A routing link planning method for data reuse, comprising:
establishing, in a Real Time Network ,RTN, an initial routing link from a source node where a server is located to a first target node where a first client is located; and
when a second client that shares data of the server with the first client accesses the RTN, planning a data reuse routing link from the source node to a second target node according to whether the second target node where the second client is located is a data node of the initial routing link.

2. The method according to claim 1, wherein if the second target node where the second client is located is not a data node of the initial routing link, planning a data reuse routing link from the source node to the second target node comprises:
selecting candidate nodes from a data topology of the RTN, and planning the data reuse routing link according to the candidate nodes and a routing policy.

3. The method according to claim 1, wherein if the second target node where the second client is located is a data node of the initial routing link, planning a data reuse routing link from the source node to the second target node comprises:
if the load of a data instance included in the second target node exceeds a threshold, selecting candidate nodes from a data topology of the RTN, and planning the data reuse routing link according to the candidate nodes and a routing policy; and
if the load of a data instance included in the second target node does not exceed the threshold, planning a routing link between the source node and the second target node in the initial routing link as the data reuse routing link.

4. The method according to claim 1, after planning a data reuse routing link from the source node to the second target node, further comprising:
if there is no overlap between the data reuse routing link and the initial routing link, reusing data of a server in the source node to the second client;
if there is overlap between the data reuse routing link and the initial routing link, and the load of a data instance on a last overlapped data node does not exceed a preset threshold, reusing data in the last overlapped node to the second client; and
if there is overlap between the data reuse routing link and the initial routing link, and the load of a data instance on a last overlapped data node exceeds the preset threshold, re-planning a new data reuse routing link.

5. The method according to claim 4, further comprising:
if there is overlap between the data reuse routing link and the initial routing link, and the load of multiple data instances on a last overlapped data node does not exceed the preset threshold,
selecting data of a data instance with the lightest load and the fewest hops for reuse to the second client.

6. The method according to claim 3, wherein selecting candidate nodes from a data topology of the RTN comprises:
selecting data nodes in the initial routing link as the candidate nodes; and
in addition the data nodes in the initial routing link, selecting data node whose load of a data instance in the RTN does not exceed a preset threshold as candidate nodes.

7. The method according to claim 1, after planning a data reuse routing link from the source node to the second target node, further comprising:
adding the data reuse routing link to the initial routing link.

8. A routing link planning apparatus for data reuse, comprising:
an establishment module, configured to establish, in a Real Time Network ,RTN, an initial routing link from a source node where a server is located to a first target node where a first client is located; and
a planning module, configured to, when a second client that shares data of the server with the first client accesses the RTN, plan a data reuse routing link from the source node to a second target node according to whether the second target node where the second client is located is a data node of the initial routing link.

9. The apparatus according to claim 8, wherein the planning module comprises:
a first planning unit, configured to select candidate nodes from a data topology of the RTN, and
plan the data reuse routing link according to the candidate nodes and a routing policy.

10. The apparatus according to claim 8, wherein the planning module further comprises:
a second planning unit, configured to, if the load of a data instance included in the second target node exceeds a threshold, select candidate nodes from a data topology of the RTN, and plan the data reuse routing link according to the candidate nodes and a routing policy; and
a third planning unit, configured to, if the load of a data instance included in the second target node does not exceed the threshold, plan a routing link between the source node and the second target node in the initial routing link as the data reuse routing link.

11. The apparatus according to claim 8, further comprising:
an addition module, configured to add the data reuse routing link to the initial routing link.

12. A computer-readable storage medium storing a computer program which, when executed by a processor, implements the steps of the method according to any one of claims 1 to 7.

13. An electronic device, comprising a memory, a processor, and a computer program which is stored in the memory and executable on the processor, wherein the processor implements the steps of the method according to any one of claims 1 to 7 when executing the computer program.
